# EUROPEAN PATENT SPECIFICATION

(11) **EP 3 121 030 B1**
(45) Date of publication and mention of the grant of the patent: **28.04.2021**
(21) Application number: 16161911.9
(22) Date of filing: 23.03.2016
(51) Int. Cl.: B60B 33/08, A45C 5/14

(54) **UNIVERSAL WHEEL GROUP AND SUITCASE**
UNIVERSELLE RADGRUPPE UND KOFFER
GROUPE DE ROUE UNIVERSELLE ET VALISE

(30) Priority: 21.07.2015 CN 201510432151
(43) Date of publication of application: 25.01.2017
(73) Proprietor: Xiaomi Inc., Beijing 100085 (CN)
(72) Inventor: ZHAO, Tong, 100085 BEIJING (CN); TAO, Qun, 100085 BEIJING (CN); LIU, Huayijun, 100085 BEIJING (CN)
(74) Representative: Cabinet Beau de Loménie

(56) References cited:
- CN-A- 104 972 833
- CN-U- 204 801 421
- DE-A1- 3 117 666
- GB-A- 2 515 508
- KR-A- 20040 076 178
- US-A1- 2006 101 614

## Description

### TECHNICAL FIELD

The present invention generally relates to the technical field of wheel groups, and more particularly, to a universal wheel group and a suitcase.

### BACKGROUND

Wheel groups are installed on bottoms of most cabinets, cases and the like which are easy to be moved and carried in everyday life. For example, users will usually carry suitcases on business trips or in journeys, and the bottoms of these suitcases are installed with two or four wheel groups so that the suitcases can be dragged by the users.

However, a wheel group of a suitcase in the related art is easy to damage, thus the whole suitcase cannot be used anymore. Documents KR 2004 0076178 and GB 2 515 508 disclose known wheel groups.

### SUMMARY

Accordingly, the present invention provides a universal wheel group and a suitcase, so as to solve the disadvantage in the related art.

According to a first aspect, the invention relates to a universal wheel group, including:
a base structure, including an upper base and a lower base which form a cavity;
a wheel ball, locked in the cavity so as to roll in all directions, wherein a bottom of the lower base is provided with an opening enabling a part of the wheel ball to protrude out of a lower end face of the lower base to form an exposed rolling spherical surface, and an inner diameter of the opening is smaller than a diameter of the wheel ball.

The universal wheel group further includes spherical rollers which are not less than three, wherein the rollers are arranged between an inner wall of the upper base and a surface of the wheel ball so as to roll.

According to the invention, the universal wheel group further includes an elastic gasket, which is arranged between the inner wall of the upper base and the surface of the wheel ball, wherein roller mounting bases, in one-to-one correspondence with the rollers which are not less than three, are distributed uniformly on a bottom of the elastic gasket in a circumferential direction, and grooves matched with the shapes of the rollers are arranged on the roller mounting bases.

According to an exemplary embodiment, the upper base may be in a disc-shaped structure, and the elastic gasket may be arranged on a lower end face of the upper base.

According to an exemplary embodiment, the upper base may include a cylinder and an upper end cover located on an upper end face of the cylinder, and the elastic gasket may be arranged on a lower end face of the upper end cover and located inside the cylinder.

According to an exemplary embodiment, the upper base and the lower base may be connected by means of adhesion.

According to an exemplary embodiment, the upper base and the lower base may be connected by a screw fastener.

According to an embodiment which does not form part of the invention, the lower end face of the lower base may be parallel with a horizontal plane.

According to the invention, the lower end face of the lower base is bean oblique plane oblique towards a horizontal plane.

According to an exemplary embodiment, an edge of an inner side of the bottom of the lower base may be provided with a scraper.

A suitcase is provided according to a second aspect of an embodiment of the present invention, including:
a case body;
at least one universal wheel group described in any one of the embodiments above.

According to an exemplary embodiment, at least one part of the base structure of the universal wheel group may be embedded inside a bottom plate of the case body, and the exposed rolling spherical surface of the wheel ball of the universal wheel group may be located outside a bottom of the case body.

The technical solutions provided by the embodiments of the present invention may include the following beneficial effect.

It may be learned from the embodiments above that the present invention uses a wheel ball capable of rolling in all directions so that a wheel group can be rotated in all directions. Meanwhile, the wheel ball is arranged in a cavity formed by a base structure, so that the wheel ball can be wrapped and protected, thus avoiding damage including fracture and the like of the wheel ball due to knocking, bumping and the like, and prolonging the service life of the universal wheel group.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A and Fig. 1B are structural diagrams of a universal wheel group in the related art.
Fig. 2 is an exploded diagram of a universal wheel group, according to an exemplary embodiment.
Fig. 3 is a perspective view of an assembled universal wheel group, according to an exemplary embodiment.
Fig. 4 is an exploded diagram of another universal wheel group, according to an exemplary embodiment.
Fig. 5 is an exploded diagram of another universal wheel group, according to an exemplary embodiment.
Fig. 6 is a schematic diagram of a structure and an assembly relation between an elastic gasket and an upper base, according to an exemplary embodiment.
Fig. 7 is a schematic diagram of another structure and assembly relation between an elastic gasket and an upper base, according to an exemplary embodiment.
Fig. 8 is an exploded diagram of another universal wheel group, according to an exemplary embodiment.
Fig. 9 is an exploded diagram of another universal wheel group, according to an exemplary embodiment.
Fig. 10 is an exploded diagram of another universal wheel group, according to an exemplary embodiment.
Fig. 11 is a perspective view of a universal wheel, not forming part of the invention.
Fig. 12 is a perspective view of another assembled universal wheel group, according to an exemplary embodiment.
Fig. 13 is a section diagram of a universal wheel group, according to an exemplary embodiment.
Fig. 14 is a perspective view of a suitcase, according to an exemplary embodiment.
Fig. 15 is a perspective view of another suitcase, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

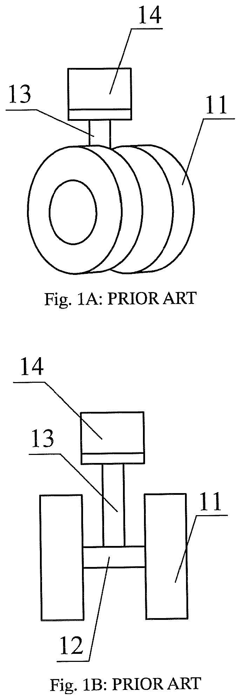

Fig. 1A and Fig. 1B are structural diagrams of a universal wheel group in the related art. As shown in Fig. 1A and Fig. 1B, the universal wheel group in the related art includes two rolling wheels 11, which are arranged in parallel. The two rolling wheels 11 are connected by a horizontal shaft 12, thus enabling the two rolling wheels 11 to roll synchronously through the horizontal shaft 12, and enabling a suitcase and the like using the universal wheel group to move along the ground. In the meanwhile, the horizontal shaft 12 is further connected with a vertical shaft 13 while the vertical shaft 13 is connected to a bearing structure 14 at a bottom of a suitcase (or other objects which are not shown in the figures) so that the two rolling wheels 11, the horizontal shaft 12 and the vertical shaft 13 may rotate integrally in a horizontal direction along the bearing structure 14, so that the suitcase can rotate "universally".

However, as a rolling structure in direct contact with the ground, the rolling wheels 11 are completely exposed in a space, thus the rolling wheels 11, the horizontal shaft 12, or the vertical shaft 13 and the like are easily damaged, broken for example, in the case of an irregular ground or violent transportation and so on, which turns the universal rolling wheels into the most breakable structure of a case or a cabinet, such as a suitcase.

Therefore, an embodiment of the present invention improves the structure of the universal wheel group so as to solve the problem above existing in the related art, and detailed description will be provided below with reference to the accompanying drawings.

### 1. Integral structure

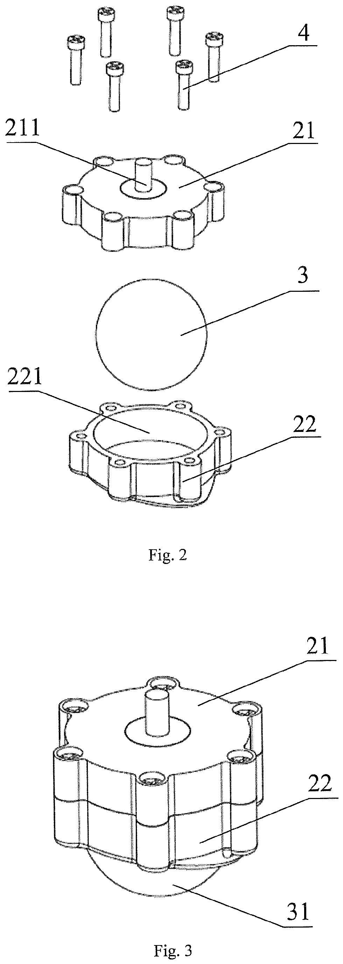

Fig. 2 is an exploded diagram of a universal wheel group, according to an exemplary embodiment and Fig. 3 is a perspective view of an assembled universal wheel group, according to an exemplary embodiment. As shown in Fig. 2 and Fig. 3, the universal wheel group may include:
a base structure, including an upper base 21 and a lower base 22, which can form a cavity 221;
a wheel ball 3, locked in the cavity 221 so as to roll in all directions, wherein a bottom of the lower base 22 is provided with an opening enabling a part of the wheel ball 3 to protrude out of a lower end face of the lower base 22 so as to form an exposed rolling spherical surface 31, and an inner diameter of the opening is smaller than a diameter of the wheel ball 3.

In the embodiment, the cavity 211 formed in the base structure may wrap the wheel ball 3 in the cavity 221 to avoid direction contact between the wheel ball 3 and the outside, thereby preventing damage of the wheel ball 3 due to an irregular ground, violent transportation and so on. In the meanwhile, the base structure avoids fragile and easily-broken shaft structures including a transverse shaft 12, a vertical shaft 13 and the like as shown in Fig. 1B during a rolling process of the universal wheel group while wrapping the wheel ball 3, thereby preventing a structure in front of the wheel ball 3, including the base structure and the like, from being damaged by an irregular ground, violent transportation and so on, and improving the overall reliability of the universal wheel group.

In the embodiment, the inner diameter of the opening formed on the lower end face of the lower base 22 is smaller than the diameter of the wheel ball 3, thus it is necessary to place the wheel ball 3 in the cavity 221 in the case that the upper base 21 and the lower base 22 are separated, and then the upper base 21 and the lower base 22 are combined to obtain the complete universal wheel group, wherein in an exemplary embodiment, the upper base 21 and the lower base 22 may be connected by a screw fastener. For example, screws 4 penetrate through threaded holes respectively arranged on peripheries of the upper base 21 and the lower base 22 to connect the upper base 21 and the lower base 22 in Fig. 2.

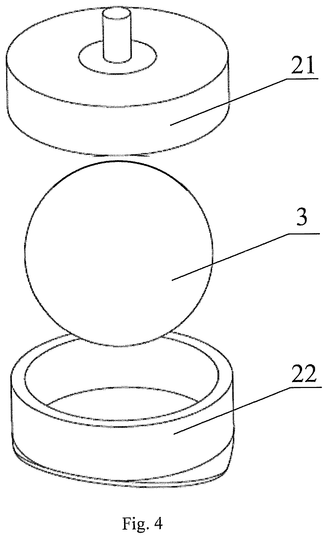

As another exemplary embodiment, the upper base 21 and the lower base 22 may be also connected by means of adhesion. As shown in Fig. 4, an adhesive including glue and the like is coated on at least one of a lower end face of the upper base 21 and an upper end face of the lower base 22 to adhere the two. Of course, the upper base 21 and the lower base 22 may be connected by various methods, which are not limited by embodiments of the present invention.

### 2. Roller structure

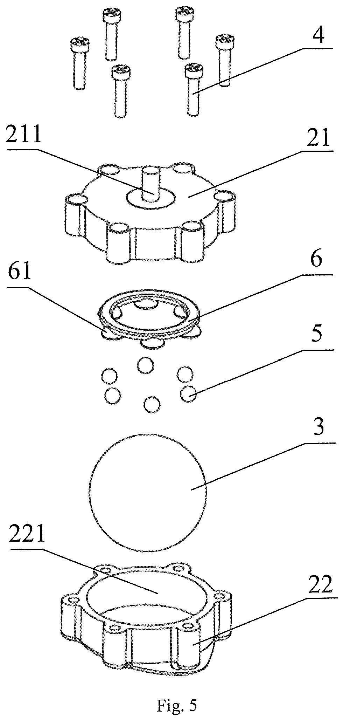

Fig. 5 is an exploded diagram of another universal wheel group, according to an exemplary embodiment. As shown in Fig. 5, based on the embodiment as shown in Fig. 2, the universal wheel group may further include:
rollers 5 which are not less than three, wherein the rollers 5 are arranged between an inner wall of the upper base 21 and a surface of the wheel ball 3 so as to roll.

In the embodiment, the rollers 5 are arranged so as to convert sliding friction between the wheel ball 3 and a bottom surface or the inner wall of the upper base 21 into rolling friction between the wheel ball 3 and the rollers 5, thereby reducing a friction force sensed by the wheel ball 3 during a rolling process, and the universal wheel group moves more smoothly.

Further, as shown in Fig. 5, an elastic gasket 6 may be arranged between the inner wall of the upper base 21 and the surface of the wheel ball 3, roller mounting bases 61 in one-to-one correspondence with the rollers 5 which are not less than three are distributed uniformly on a bottom of the elastic gasket 6 in a circumferential direction, and grooves matched with the shapes of the rollers 5 are arranged on the roller mounting bases 61.

In the embodiment, the elastic gasket 6 may be arranged to absorb vibration sensed during a rolling process of the rollers 5 and the wheel ball 3, thereby implementing a damping effect, and prolonging the service life of the universal wheel group. In the meanwhile, an elastic force of the elastic gasket 6 may properly extrude the rollers 5 to keep the rollers 5 and the wheel ball 3 always in contact without affecting normal rolling between the rollers 5 and the wheel ball 3 (i.e., a generated extrusion force will not be too large), thereby ensuring the stability of the integral structure of the universal wheel group.

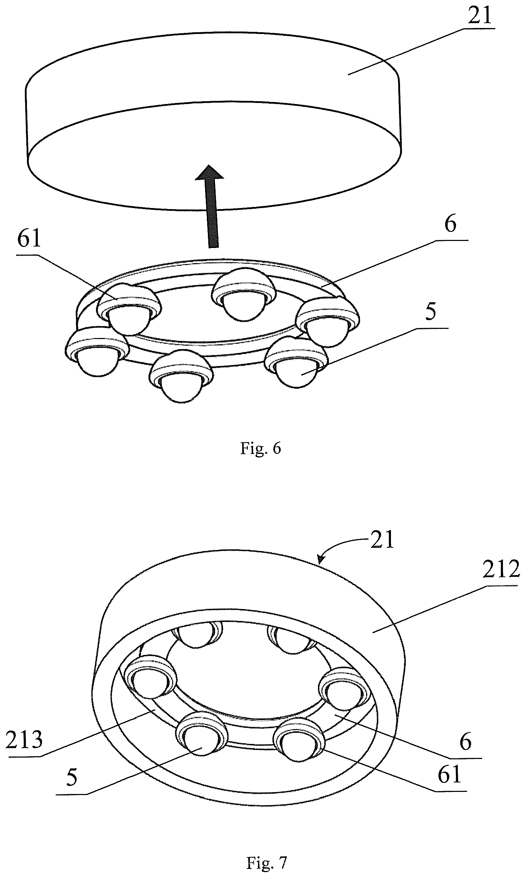

In the embodiment, the roller mounting bases 61 may be in a bowl shape having a downward opening as shown in Fig. 6, thereby accommodating at least one part of the rollers 5 therein to limit the positions of the rollers 5 and prevent separation.

In a technical solution of embodiments of the present invention, there may be various matching relations between the elastic gasket 6 and the upper base 21. Two possible matching relations will be described below, but the matching relations are not limited by embodiments of the present invention.

### Matching relation 1

In an exemplary embodiment of the present invention, as shown in Fig. 6, the upper base 21 is in a disc-shaped structure and the elastic gasket 6 is arranged on the lower end face of the upper base 21. In the embodiment, the whole cavity 221 as shown in Fig. 2 is located inside the lower base 22 while the upper base 21 acts as a cover of the cavity 221.

### Matching relation 2

In another exemplary embodiment of the present invention, as shown in Fig. 7, the upper base 21 includes a cylinder 212 and an upper end cover 213 located on an upper end face of the cylinder 212. The elastic gasket 6 is arranged on a lower end face of the upper end cover 213 and located inside the cylinder 212. In the embodiment, the cavity 221 as shown in Fig. 2 is jointly formed by the upper base 21 and the lower base 22, while the upper base 21 and the lower base 22 have a smaller structural difference than the case as shown in Fig. 6. The upper base 21 and the lower base 22 may be even structurally symmetrical, so as to facilitate production and machining. For example, the upper base 21 and the lower base 22 may apply completely identical structures, or at least some machining processes of the two are overlapped, thereby reducing the production cost and improving the production efficiency.

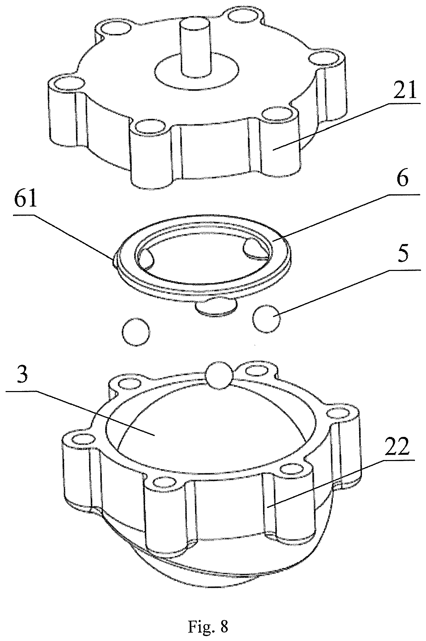

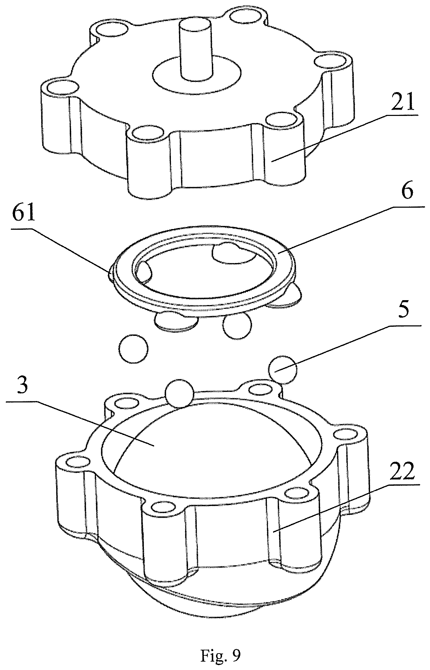

Besides, although six rollers 5 are arranged in Fig. 5, an embodiment of the present invention can ensure the stability of the rollers 5 and the wheel ball 3 during a rolling process by arranging not less than three rollers as described above, because a straight line is determined by three points. In other words, the present invention does not limit a specific applied number of rollers 5 as long as not less than three rollers 5 are applied. For example, Fig. 8, Fig. 9 and Fig. 10 respectively illustrate three, four and five rollers 5.

### 3. Arrangement of end face of lower base 22

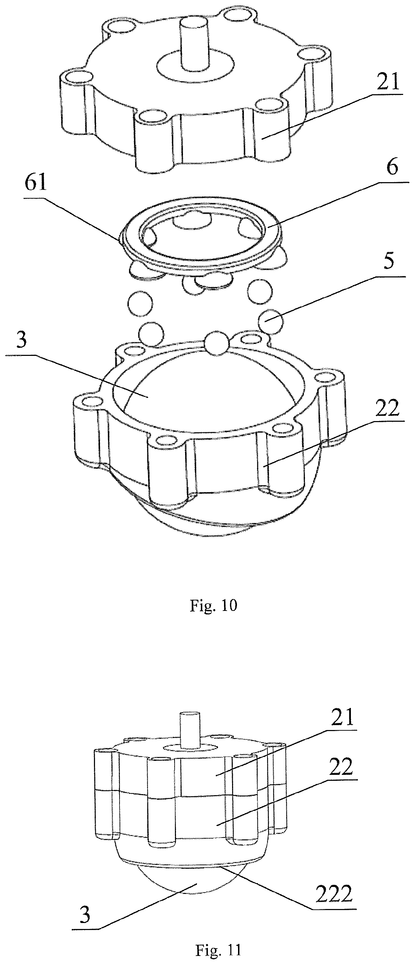

As an embodiment not forming part of the invention, as shown in Fig. 11, the lower end face 222 of the lower base 22 may be parallel with a horizontal plane. In the embodiment, the lower end face 222 can protect the wheel ball 3 uniformly in all angles, thereby avoiding an impact on the wheel ball 3 and so on, and improving the reliability of the universal wheel group.

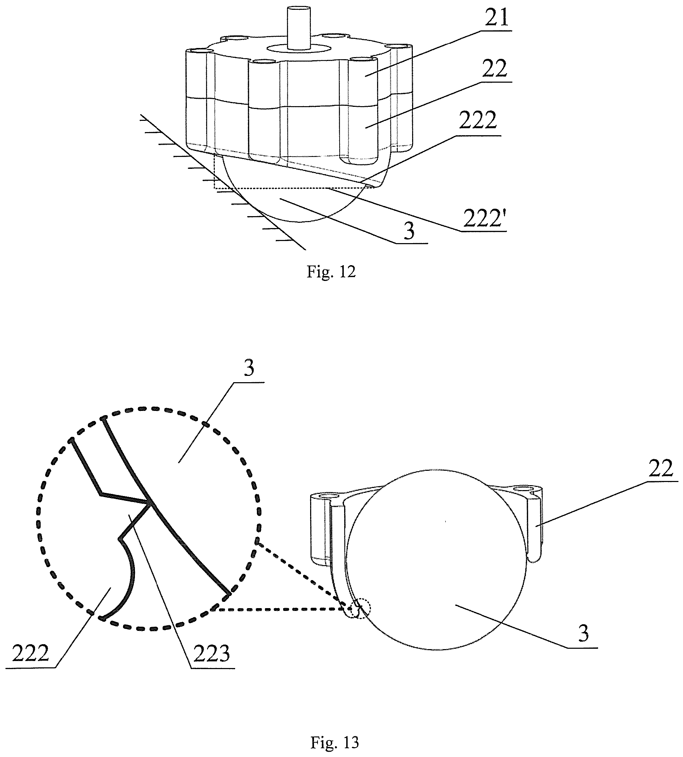

As another exemplary embodiment, as shown in Fig. 12, the lower end face 222 of the lower base 22 may be an oblique plane oblique towards a horizontal plane. In the embodiment, the lower end face 222 is set as an oblique plane, which can wrap the wheel ball 3 as much as possible while ensuring that the lower end face 222 will not contact a slope surface (the ground as shown in Fig. 12) even on a slope having a large angle during a process in which a user uses a case or a cabinet installed with a corresponding universal wheel group, e.g., the user drags a suitcase up and down a slope, thereby avoiding situations including inconvenient dragging and easy abrasion of the lower base 22 and so on when a lower end face 222' in a horizontal condition contacts the slope surface, and prolonging the service life of the universal wheel group.

Further, as shown in Fig. 13, an edge of an inner side of the bottom of the lower base 222 may be provided with a scraper 223. Debris adhered on the surface of the wheel ball 3 can be scrapped by the scrapper 223, thereby keeping the surface of the wheel ball 3 clean, avoiding the debris from being rolled into the cavity 221 and ensuring smooth rolling of the wheel ball 3. Of course, although the structure as shown in Fig. 12 is applied in Fig. 13 as an example, the scrapper 223 can be obviously applied in the embodiment as shown in Fig. 11 or other embodiments, which is not limited by embodiments of the present invention.

### 4. Suitcase

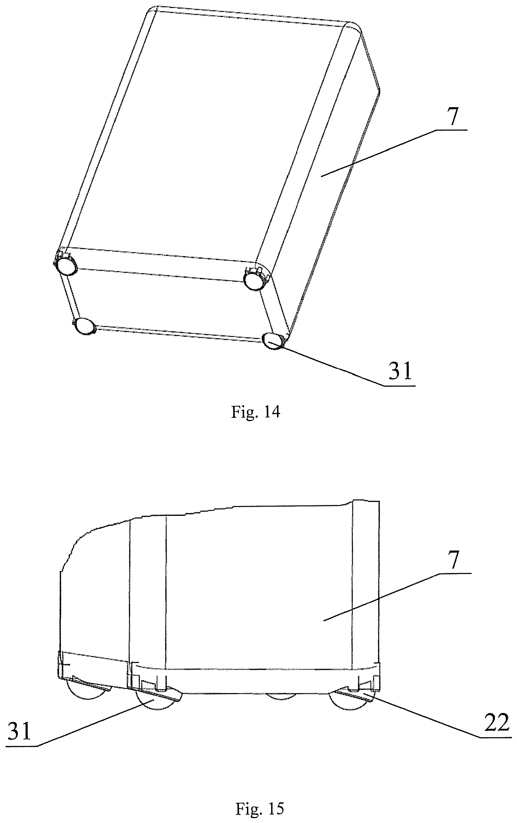

Fig. 14 and Fig. 15 show a suitcase installed with a universal wheel group in embodiments of the present invention. In the embodiment four (or any other quantity) universal wheel groups are arranged at a bottom of a case body 7. As illustrated by the embodiments in Fig. 2 to Fig. 5, a top surface of the upper base 21 may be provided with a connector 211, so that a universal base and the case body 7 can be connected. Of course, other connection method may be also applied, which is not limited by an embodiment of the present invention.
wherein as shown in Fig. 14, at least one part of a base structure of the universal wheel group may be embedded inside a bottom plate of the case body 7 while an exposed rolling spherical surface 31 of the wheel ball 3 of the universal wheel group may be located outside the bottom of the case body 7, thereby ensuring that the rolling spherical surface 31 contacts and rolls with the ground. In the embodiment, as shown in Fig. 15, most of the base structure may be wrapped inside the case body 7, while only corresponding parts of the rolling spherical surface 31 and the lower base 22 are exposed, thereby protecting the wheel ball 3 and the base structure, avoiding direct contact with an external force during violent transportation and so on, and prolonging the service life of the universal wheel group.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. The scope of the invention is defined by the appended claims.

### INDUSTRIAL APPLICABILITY

It may be learned from embodiments above that the present invention uses a wheel ball capable of rolling in all directions so that a wheel group can be rotated in all directions. Meanwhile, the wheel ball is arranged in a cavity formed by a base structure, so that the wheel ball can be wrapped and protected, thus avoiding damage including fracture and the like of the wheel ball due to knocking, bumping and the like, and prolonging the service life of the universal wheel group.

## Claims

1. A universal wheel group, the universal wheel group comprises:
a base structure, comprising an upper base (21) and a lower base (22) which form a cavity (221);
a wheel ball (3), locked in the cavity (221) so as to roll in all directions, wherein a bottom of the lower base (22) is provided with an opening enabling a part of the wheel ball (3) to protrude out of a lower end face (222) of the lower base (22) to form an exposed rolling spherical surface (31), and an inner diameter of the opening is smaller than a diameter of the wheel ball (3);
the universal wheel group further comprises:
rollers (5) which are not less than three, wherein the rollers (5) are arranged between an inner wall of the upper base (21) and a surface of the wheel ball (3) so as to roll; **characterized in that** the universal wheel group further comprises: a base structure, wherein the lower end face (222) of the lower base (22) is an oblique plane oblique towards a horizontal plane; spherical rollers and
an elastic gasket (6), which is arranged between the inner wall of the upper base (21) and the surface of the wheel ball (3), wherein roller mounting bases (61) in a bowl shape, in one-to-one correspondence with the rollers (5) which are not less than three, are distributed uniformly on a bottom of the elastic gasket (6) in a circumferential direction, and grooves matched with the shapes of the rollers (5) are arranged on the roller mounting bases (61).

2. The universal wheel group according to claim 1, wherein the upper base (21) is in a disc-shaped structure, and the elastic gasket (6) is arranged on a lower end face of the upper base (21).

3. The universal wheel group according to claim 1, wherein the upper base (21) comprises a cylinder (212) and an upper end cover (213) located on an upper end face of the cylinder (212), and the elastic gasket (6) is arranged on a lower end face of the upper end cover (213) and located inside the cylinder (212).

4. The universal wheel group according to claim 1, wherein the upper base (21) and the lower base (22) are connected by means of adhesion.

5. The universal wheel group according to claim 1, wherein the upper base (21) and the lower base (22) are connected by a screw fastener.

6. The universal wheel group according to claim 1, wherein an edge of an inner side of the bottom of the lower base (22) is provided with a scraper (223).

7. A suitcase, **characterized in that** the suitcase comprises:
a case body (7);
at least one universal wheel group according to any one of claims 1 to 6.

8. The suitcase according to claim 7, wherein at least one part of the base structure of the universal wheel group is embedded inside a bottom plate of the case body (7), and the exposed rolling spherical surface (31) of the wheel ball (3) of the universal wheel group is located outside a bottom of the case body (7).

## Patentansprüche

1. Universelle Rollengruppe, wobei die universelle Rollengruppe umfasst:
eine Basisstruktur, umfassend eine obere Basis (21) und eine untere Basis (22), die einen Hohlraum (221) bilden,
eine Rollenkugel (3), die in den Hohlraum (221) eingeschlossen ist, um in alle Richtungen zu rollen, wobei ein Boden der unteren Basis (22) mit einer Öffnung versehen ist, die ermöglicht, dass ein Teil der Rollenkugel (3) aus einer unteren Endfläche (222) der unteren Basis (22) herauszuragen, um eine freigelegte sphärische Rolloberfläche (31) zu bilden, und ein Innendurchmesser der Öffnung kleiner als ein Durchmesser der Rollenkugel (3) ist,
wobei die universelle Rollengruppe ferner umfasst:
Laufrollen (5), die nicht weniger als drei sind, wobei die Laufrollen (5) zwischen einer Innenwand der oberen Basis (21) und einer Oberfläche der Rollenkugel (3) angeordnet sind, um zu rollen, **dadurch gekennzeichnet, dass** die universelle Rollengruppe ferner umfasst: eine Basisstruktur, wobei die untere Endfläche (222) der unteren Basis (22) eine geneigte Ebene ist, die geneigt zu einer horizontalen Ebene ist, sphärische Laufrollen und
eine elastische Dichtung (6), die zwischen der Innenwand der oberen Basis (21) und der Oberfläche der Rollenkugel (3) angeordnet ist, wobei Laufrollenmontagebasen (61) in einer Schalenform in einer Eins-zu-Eins-Übereinstimmung mit den Laufrollen (5), die nicht weniger als drei sind, gleichmäßig auf einem Boden der elastischen Dichtung (6) in einer Umfangsrichtung verteilt sind, und Nuten, die auf die Formen der Laufrollen (5) abgestimmt sind, auf den Laufrollenmontagebasen (61) angeordnet sind.

2. Universelle Rollengruppe nach Anspruch 1, wobei die obere Basis (21) in einer scheibenförmigen Struktur ist, und die elastische Dichtung (6) auf einer unteren Endfläche der oberen Basis (21) angeordnet ist.

3. Universelle Rollengruppe nach Anspruch 1, wobei die obere Basis (21) einen Zylinder (212) und eine obere Endabdeckung (213), die sich auf einer oberen Endfläche des Zylinders (212) befindet, umfasst, und die elastische Dichtung (6) auf einer unteren Endfläche der oberen Endabdeckung (213) angeordnet ist und sich im Inneren des Zylinders (212) befindet.

4. Universelle Rollengruppe nach Anspruch 1, wobei die obere Basis (21) und die untere Basis (22) mittels Adhäsion verbunden sind.

5. Universelle Rollengruppe nach Anspruch 1, wobei die obere Basis (21) und die untere Basis durch ein Schraubenbefestigungselement verbunden sind.

6. Universelle Rollengruppe nach Anspruch 1, wobei ein Rand einer Innenseite des Bodens der unteren Basis (22) mit einem Schaber (223) versehen ist.

7. Koffer, **dadurch gekennzeichnet, dass** der Koffer umfasst:
einen Gehäusekörper (7),
mindestens eine universelle Rollengruppe nach einem der Ansprüche 1 bis 6.

8. Koffer nach Anspruch 7, wobei mindestens ein Teil der Basisstruktur der universellen Rollengruppe im Inneren einer unteren Platte des Gehäusekörpers (7) eingebettet ist, und die freigelegte sphärische Rolloberfläche (31) der Rollenkugel (3) der universellen Rollengruppe sich außerhalb eines Bodens des Gehäusekörpers (7) befindet.

## Revendications

1. Groupe de roue universelle, le groupe de roue universelle comprend :
une structure de base, comprenant une base supérieure (21) et une base inférieure (22) qui forment une cavité (221) ;
un roulement de roue (3) bloqué dans la cavité (221) afin de rouler dans toutes les directions, dans lequel un fond de la base inférieure (22) est prévu avec une ouverture permettant à une partie du roulement de roue (3) de faire saillie hors d'une face d'extrémité inférieure (222) de la base inférieure (22) pour former une surface sphérique de roulement exposée (31), et un diamètre interne de l'ouverture est inférieur à un diamètre du roulement de roue (3) ;
le groupe de roue universelle comprend en outre :
des galets (5) qui ne sont pas inférieurs à trois, dans lequel les galets (5) sont agencés entre une paroi interne de la base supérieure (21) et une surface du roulement de roue (3) afin de rouler ; **caractérisé en ce que** le groupe de roue universelle comprend en outre : une structure de base, dans lequel la face d'extrémité inférieure (222) de la base inférieure (22) est un plan oblique, oblique vers un plan horizontal ; des galets sphériques, et
un joint élastique (6) qui est agencé entre la paroi interne de la base supérieure (21) et la surface du roulement de roue (3), dans lequel les bases de montage de galet (61) en forme de cuvette, en correspondance un à un avec les galets (5) qui ne sont pas inférieurs à trois, sont réparties uniformément sur un fond du joint élastique (6) dans une direction circonférentielle, et des rainures correspondant aux formes des galets (5) sont agencées sur les bases de montage de galet (61).

2. Groupe de roue universelle selon la revendication 1, dans lequel la base supérieure (21) est une structure en forme de disque, et le joint élastique (6) est agencé sur une face d'extrémité inférieure de la base supérieure (21).

3. Groupe de roue universelle selon la revendication 1, dans lequel la base supérieure (21) comprend un cylindre (212) et un couvercle d'extrémité supérieur (213) positionné sur une face d'extrémité supérieure du cylindre (212), et le joint élastique (6) est agencé sur une face d'extrémité inférieure du couvercle d'extrémité supérieur (213) et positionné à l'intérieur du cylindre (212).

4. Groupe de roue universelle selon la revendication 1, dans lequel la base supérieure (21) et la base inférieure (22) sont raccordées au moyen de collage.

5. Groupe de roue universelle selon la revendication 1, dans lequel la base supérieure (21) et la base inférieure (22) sont raccordées par une fixation à vis.

6. Groupe de roue universelle selon la revendication 1, dans lequel un bord d'un côté interne du fond de la base inférieure (22) est prévu avec un racloir (223).

7. Valise, **caractérisée en ce que** la valise comprend :
un corps de valise (7) ;
au moins un groupe de roue universelle selon l'une quelconque des revendications 1 à 6.

8. Valise selon la revendication 7, dans laquelle au moins une partie de la structure de base du groupe de roue universelle est encastrée à l'intérieur d'une plaque inférieure du corps de valise (7), et la surface sphérique de roulement exposée (31) du roulement de roue (3) du groupe de roue universelle est positionnée à l'extérieur d'un fond du corps de valise (7).
